# EUROPÄISCHE PATENTANMELDUNG

(11) **EP 1 403 750 A1**
(43) Veröffentlichungstag der Anmeldung: **31.03.2004**
(21) Anmeldenummer: 02021582.8
(22) Anmeldetag: 27.09.2002
(51) Int. Cl.: G05B 23/02, G05B 9/02

(54) **System zum Aufspüren und Bewerten von Veränderungen an technischen Prozessen**

(71) Anmelder: Renner, Peter, 51515 Kürten (DE)
(72) Erfinder: Renner, Peter, 51515 Kürten (DE)
(74) Vertreter: Nau, Walter, Dipl.-Ing.

(57) **Zusammenfassung**

System zum Aufspüren von Veränderungen an technischen Prozessen, Maschinen oder dergleichen, bei denen Messdaten über Messketten erfasst werden, die Sensoren, Sensorleitungen und eine Auswerteelektronik enthalten, und mit einer beherrschenden Software,
wobei voneinander abhängige Messgrößen zu Messgruppen zusammengefasst werden, wobei die Messgruppen mit Bezugsgrößen verknüpft (Modul 29) werden, wobei Gültigkeitsbedingungen für die Messdaten definiert (Modul 28) werden und wobei die Messdaten nur dann genutzt werden, wenn die Gültigkeitsbedingungen erfüllt sind.
Zudem werden die Messdaten auf Fehler in der Messtechnik und auf schwerwiegende plötzlich auftretende Störungen hin untersucht, es wird Alarm gegeben und den Bedienungspersonen Störungen mitgeteilt.

## Beschreibung

Die Erfindung bezieht sich auf ein System zum Aufspüren und Bewerten von Veränderungen an technischen Prozessen, Maschinen, Anlagen oder dergleichen gemäss dem Obergriff des Anspruchs 1.

Das Aufspüren und Bewerten von Veränderungen an Prozessen ist eine Voraussetzung, um den Zustand einer Maschine/Anlage zu beurteilen.

Werden solche Veränderungen rechtzeitig erkannt, können größere Schäden vermieden werden, indem rechtzeitig Wartungsmaßnahmen vorgenommen werden, bevor größere Schäden verbunden mit längeren Stillstandszeiten eintreten.

Die Erfindung möchte einen Beitrag leisten, Maschinen und Anlagen besser zu nutzen, ihre Standzeit zu erhöhen, die Sicherheit zu verbessern, den Verlust wertvoller Güter zu vermeiden, Versuchsergebnisse zu optimieren und den Einsatz von Energie zu verringern.

Bei einer mehrfach gelagerten Antriebswelle sind kleine Veränderungen der Temperaturwerte der Lagerstellen bedeutsam für die zu erwartende Standzeit. Die Schwierigkeit besteht darin, dass die Temperaturwerte nicht konstant sind. Sie ändern sich mit der Drehzahl der Welle, der Radialkraft, die auf die einzelnen Lagerstellen wirkt, und mit der Umgebungstemperatur. Es scheint daher nicht möglich zu sein, kleine Veränderungen aufzuspüren, die für den Zustand der Lager relevant sind.

In Rohrleitungen z.B. in der Wasserversorgung werden kleinere Lecks häufig nicht erkannt. Sie führen aber, über die Zeit gerechnet, zu erheblichen Wasserverlusten, die weder ökologisch noch von der Kostenseite her vertretbar sind. Da die abgenommene Wassermenge erheblichen Schwankungen unterliegt, scheint es nicht möglich zu sein, kleine Veränderungen, die sich über die Zeit ergeben, aufzuspüren.

Die Piloten von Flugzeugen müssen eine Reihe von Instrumenten gleichzeitig beobachten. Dies führt leicht zu einer Überforderung zumal die Flugsituation die volle Aufmerksamkeit erfordert. Kleine Veränderungen, die für die Sicherheit relevant sind, können so nicht erkannt werden.

In der Forschung und Entwicklung werden häufig Langzeitversuche durchgeführt. Bei der Produktentwicklung müssen Versuche über einen langen Zeitraum durchgeführt werden, bevor eine Beurteilung der Lebensdauer möglich ist. Es wäre sehr hilfreich, wenn schon zu einem frühen Zeitpunkt Trends zu erkennen wären, die eine Aussage über die Standzeit erlauben.

Diesen Beispielen ist gemeinsam, dass auf technische Prozesse, Maschinen und Anlagen Einflüsse einwirken, die sich in den Messdaten niederschlagen, aber keine Veränderungen des Prozesses selbst sind. Die Messdaten sind vergleichbar und können daher nicht für die Auswertung bezüglich kleiner Veränderungen herangezogen werden. Trends, die auf kleinen Veränderungen beruhen, können somit nicht aufgespürt werden.

Aufgabe der Erfindung ist es, die unbekannten Einflüsse, die auf die technischen Prozesse, Maschinen oder Anlagen einwirken und sich in den Messdaten niederschlagen, die aber nicht auf Veränderungen des Prozesses selbst zurückzuführen sind, auszuschalten, um somit zu Werten zu gelangen, die verglichen werden können und Trends aufzeigen. Weiterhin ist es Aufgabe der Erfindung, schwerwiegende Betriebsstörungen zu erkennen und zu melden, die plötzlich auftreten, und Fehler herauszufiltern, die auf Störungen der Messtechnik beruhen.

Die Aufgabe der Erfindung wird dadurch gelöst, dass Messgruppen voneinander abhängigen Messgrößen gebildet werden, dass Gültigkeitsbedingungen für die Messdaten definiert werden, unter denen die Daten der Messgruppe gültig sind, und dass jeder Messgruppe eine Bezugsgröße zugeordnet wird.
Die Erfindung ermöglicht es, unbekannte Einflussfaktoren auszuschalten und gelangt somit zu normierten Werten. Die normierten Werte können verglichen werden und zeigen Trends auf, die sonst nicht erkannt würden. Solche Trends zeigen den Maschinen/Anlagen Zustand an, der zustandsorientierte Wartungsmaßnahmen ermöglicht. Dadurch werden Betriebsstörungen erkannt, die in Kürze einen Totalausfall mit schwerwiegenden Schäden verursachen würden.

Zum Beispiel stehen die Lagertemperaturen der Lager einer Antriebswelle einer Antriebsmaschine in einem inneren Zusammenhang, da alle Lagerstellen den Einflüssen wie der Drehzahl, dem abgegebenen Drehmoment und schließlich der Umgebungstemperatur unterliegen. Somit werden sich die Lagertemperaturen bei unterschiedlichen Einflüssen ändern, ohne dass dadurch auf eine Veränderung an dem Zustand der Maschine geschlossen werden kann.

Messgrößen sind Prozess- oder Maschinendaten die via Sensoren und einer Messelektronik erfasst werden. Solche Daten sind zum Beispiel Temperaturen, Drücke, Durchflüsse, Drehzahlen etc. Unter abhängigen Messgrößen werden solche verstanden, die in einem inneren Zusammenhang bezogen auf die Funktion oder Bauart einer Maschine/Anlage stehen.

Nicht unter allen (Betriebs)bedingungen sind die Ergebnisse brauchbar. Es müssen Gültigkeitsbedingungen definiert werden, unter denen die Messergebnisse der abhängigen Messgrößen mit den älteren Messungen vergleichbar und damit gültig sind.

Wenn man das vorhergehende Beispiel einer mehrfach gelagerten Antriebswelle heranzieht, so sind die Lagertemperaturen Null, wenn die Maschine steht und somit selbstredend nicht verwendbar. Wenn eine Maschine gerade angelaufen ist, haben die einzelnen Lagerstellen noch nicht die Betriebstemperatur erreicht. Man muss also Gültigkeitsbedingungen schaffen, unter denen gültige Ergebnisse zu erwarten sind. Man wird daher nur unter der Gültigkeitsbedingung "Betriebstemperatur erreicht" die Messergebnisse als gültig weiterverarbeiten. Eine solche Gültigkeitsbedingung kann dadurch sichergestellt werden, dass zum Beispiel der Mittelwert oder der Kleinstwert der Lagertemperaturen während eines Zeitraumes unter Berücksichtigung einer Toleranz konstant bleibt.

Unter Bezugsgröße wird eine Größe verstanden, auf die sich die abhängigen Messgrößen beziehen, wobei die mathematische Beziehung nicht unbedingt bekannt sein muss. Bei dem Beispiel der Lagertemperaturen einer mehrfach gelagerten Antriebswelle kann der Mittelwert oder Kleinstwert der Temperaturen der Lagerstellen als Bezugsgröße benutzt werden. Der Bezug ist dann die Differenz der Temperaturen der einzelnen Lagerstellen zum Mittelwert oder Kleinstwert.

Ein Sonderfall des oben beschriebenen Erfindungsgedanken ist dann gegeben, wenn eine Messgruppe aus nur einer Messgröße gebildet wird. In diesem Fall wird die Messgröße auch die Bezugsgröße sein. Eine solche Anwendung kann gegeben sein, wenn Rohrleitungen auf Dichtigkeit zu überwachen sind und als Messgröße nur der Durchfluss verfügbar ist. Hierbei ist es schwierig aussagefähige Ergebnisse zu erzielen.

Hier kommt ein weiterer Erfindungsgedanke zum Tragen, der besagt, dass die Bedingungsgröße für die Gültigkeitsprüfung eine statistische Größe sein kann, gebildet aus der abhängigen Messgröße mit einer Zeitperiode als Basis. Nimmt man das Beispiel der Wasserversorgung eines Ortsteiles. Einem solchen Ortsteil wird das Nutzwasser über eine Wasserrohrleitung zugeführt, in der ein Wasserzähler eingebaut ist. Der Wasserzähler in Verbindung mit dem Querschnitt der Rohrleitung ermöglicht es, die jeweilige Durchflussmenge zu bestimmen. Andererseits ist bekannt, dass die Wassermenge über einen Zeitraum von 24 Stunden starken Schwankungen unterliegt, und dass während bestimmter Nachtstunden der Wasserverbrauch sehr gering wird. Aussagekräftige Ergebnisse werden ermöglicht, wenn man tagtäglich den Kleinstwert des Wasserverbrauchs während der Zeitperiode von 24 Stunden ermittelt. Steigt der Kleinstwert im Laufe der Zeit an, so wird man ein Leck diagnostizieren können.

In weiterer Ausbildung der Erfindung ist vorgesehen, dass für Messgruppen und für Datensätze der Messgruppen, in denen die normierten Werte oder die statistisch verdichteten normierten Werte gespeichert werden ein individueller Name vergeben wird.

In weiterer Ausbildung der Erfindung ist es vorgesehen, dass die abhängigen normierten Werte der gespeicherten Datensätze gleicher Kenngrößen zu normierten statistischen Werten verdichtet werden und dass als Basis Zeitzyklen gewählt werden.

Erst durch die Verdichtung der normierten Werte zu normierten statistischen Werten werden aussagefähige Strukturen erzeugt.

Bei dem Beispiel der Lagertemperaturen können die normierten Monatswerte im Vergleich zueinander gesicherte Trends liefern.

Zweckmäßig wird man die Verdichtung so konfigurieren, dass Zeitzyklen geschaffen werden, die auf Minuten-, Stunden-, Tages- und Monatswerten basieren. Bei dieser Vorgehensweise können progressive Veränderungen erkannt werden, die unter Umständen in kurzer Zeit zu einem Totalausfall führen können. Zum Beispiel können solche Veränderungen bei den Monatswerten noch nicht sichtbar sein, wohl aber bei den Tages-, Stunden- oder Minutenwerten.

In dem Beispiel der Prüfung von Rohrleitungen auf Dichtigkeit bei der Wasserversorgung können durch die Aneinanderreihung der täglichen Minimaldurchflüsse Undichtigkeiten erkannt werden.

In weiterer Ausbildung der Erfindung ist es vorgesehen, dass die normierten statistischen Werte der einzelnen Messgruppen automatisch überwacht und bei Auffälligkeiten in eine Warnliste eingetragen werden. Eine solche Auffälligkeit ist gegeben, wenn die Trendkurve normierter statistischer Werte den Charakter einer Geraden annimmt, der von der Waagrechten, unter Berücksichtigung einer Toleranz, abweicht. Solche Messkanäle werden in die Wartungsliste mit niedriger Priorität aufgenommen. Die Wartungsliste dient dem Bedienungspersonal dazu Zeitpunkte für Wartungsarbeiten festzulegen.

In weiterer Ausbildung der Erfindung ist es vorgesehen, dass diejenigen normierten statistischen Werte in die Wartungsliste mit hoher Priorität aufgenommen werden, bei denen die Trendkurve einen degressiven, progressiven oder einen sprunghaften Verlauf annimmt. Solche Veränderungen zeigen an, dass ein Ausfall droht. Das System liefert dann zusätzlich strenge Warnhinweise, die auch als Abschaltkriterien konfiguriert werden können.

Weiterhin ist vorgesehen, dass die Maschinen/Anlagen auch vor plötzlich auftretenden Störungen geschützt werden. Zu dem ist vorgesehen dass aufgrund fehlerhafter Messwerte Störungen in der Messtechnik erkannt werden. Plötzlich auftretenden Störungen können durch unerwartete Bauteilbrüche ausgelöst werden. Zum Beispiel durch eine Kettenreaktion, in dem ein Regler außer Kontrolle geraten ist, mit nachfolgender Überbelastung von Bauteilen. Dies geschieht erfindungsgemäß dadurch, dass die Messwerte unmittelbar nach der Erfassung, der Gruppierung, der Prüfung auf Gültigkeit und der Verrechnung mit der Bezugsgröße zu normierten Werten eine Prüfung auf Störungen in der Messtechnik und auf schwerwiegende, plötzlich auftretende Betriebsstörungen durchgeführt wird.

Eine Störung in der Messtechnik bei der Erfassung der Messdaten kann angenommen werden, wenn sich bei dem Vergleich des zuletzt erfassten und berechneten normierten Wertes mit dem Wert des vorher erfassten und berechneten normierten Wertes ein Wert ergibt, der betrieblich nicht vorkommen kann. Wenn zum Beispiel die Lagertemperatur eines Lagers einer Antriebswelle, die sich nur langsam ändert, in Sekundenbruchteilen auf den maximalen Wert geht, so kann eine Störung in der Messkette angenommen werden. Wenn der gleiche Wert signifikant kleiner wird, so ist dies ein nicht möglicher Betriebszustand, bei dem ebenfalls eine Störung der Messtechnik angenommen werden kann. Wenn eine solche Störung auftritt, so wird der gestörte Messkanal in die Warnlisten aufgenommen. Zudem kann das Bedienungspersonal alarmiert werden und es kann der Prozess stillgesetzt werden.

Eine schwerwiegende Betriebsstörung kann angenommen werden, wenn sich bei dem Vergleich ein zuletzt erfasster und berechneter normierter Wert zeigt, der keine Störung in der Messkette darstellt, dessen Wert aber im Vergleich zu den vorher erfassten und berechneten normierten Wert eine Differenz aufweist, die einen Grenzwert übersteigt. Solche Grenzwerte als Differenz zwischen den nacheinander gemessenen berechneten normierten Werten müssen so bemessen werden, dass sie im ungestörten Normalbetrieb nicht überschritten werden. Wenn eine schwerwiegende Betriebsstörung auftritt, so wird die Störung mit höchster Priorität in die Warnliste aufgenommen. Zudem kann das Bedienungspersonal alarmiert und der Prozess stillgesetzt werden.

Häufig zeigen sich Störungen eines Sensors dadurch, dass die Streubreite der Messwerte größer wird. Ein Fehler, der so schnell als möglich erkannt und behoben werden sollte.

Erfindungsgemäß geschieht dies dadurch, dass ein Vergleich der zuletzt berechneten Streubreite der normierten Werte eines Messkanals mit den zuvor berechneten Streubreite des selben Messkanals durchgeführt wird. Wenn unter Berücksichtigung einer Toleranz eine größere Streubreite ermittelt wird, so kann eine Sensorstörung angenommen werden. Eine solche Störung eines Messkanals wird in die Warnliste mit hoher Priorität aufgenommen.

Ein Ausfall in der Messtechnik kann fatale Folgen haben, wenn es sich um die Eingangsgröße eines Reglers handelt. Um Stillstandszeiten zu vermeiden kann ein durchschnittlicher Ersatzwert bereitgestellt werden, der den weiteren Betrieb der Anlage unter eingeschränkten Bedingungen ermöglicht.

Zur weiteren Erläuterung der Erfindung wird auf die Abbildungen verwiesen, in denen Ausführungsbeispiele vereinfacht dargestellt sind.

Es zeigen:
- **Abbildung 1**: schematisch eine vollständige Prozessüberwachung, in der die beherrschende Software für die Überwachung des Maschinenzustands entsprechend der Erfindung integriert ist;
- **Abbildung 2**: eine 6-fach gelagerte Antriebswelle mit Sensoren zur Erfassung der Lagertemperaturen, mit einer Messeinheit als Interface zwischen dem Prozess und dem PC für die Prozessüberwachung und einem PC auf dem die beherrschende Software entsprechend der Erfindung installiert ist;
- **Abbildung 3**: ein Flussdiagramm, das die Funktionsweise der Überwachung des Maschinenzustandes zeigt.

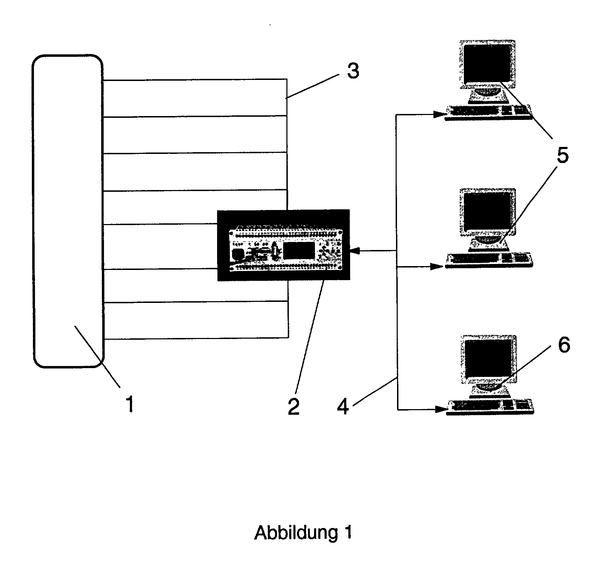

In Abbildung 1 sind bezeichnet mit
- 1: ein Prozess der überwacht wird, mit
- 2: eine Mess- und Steuereinheit als Interface zwischen dem Prozess und den PCs, mit
- 3: Leitungen zwischen den Sensoren und Aktoren des Prozesses und den Klemmen der Mess- und Steuereinheit, mit
- 4: ein Datennetz als Datenverbindung zwischen der Mess- und Steuereinheit und den PCs, mit
- 5: PCs auf denen ein Prozess- Leitsystem installiert ist und mit
- 6: ein PC auf dem die Überwachung des Maschinenzustandes installiert ist.

Die Funktion entsprechend Abbildung 1 ist folgende:
Die Mess- und Steuereinheit 2 dient als Interface zwischen dem Prozess 1, den es zu überwachen und zu bedienen gilt. In dem Prozess 1 sind Sensoren und Aktoren vorgesehen, die über die Verbindungsleitungen 3 mit der Mess- und Steuereinheit 2 verbunden sind. Die Mess- und Steuereinheit 2 ist wiederum über das Datennetzwerk 4 mit den PCs 5, 6 verbunden. Somit können analoge und digitale Signale der Sensoren zu den PCs geleitet werden. Auf den PCs 5 ist ein Prozess- Leitsystem installiert. Dieses dient zum Bedienen und Beobachten des Prozesses 1. Auf dem PC 6 ist die beherrschende Software des Systems zur Überwachung des Maschinenzustandes entsprechend der Erfindung installiert.

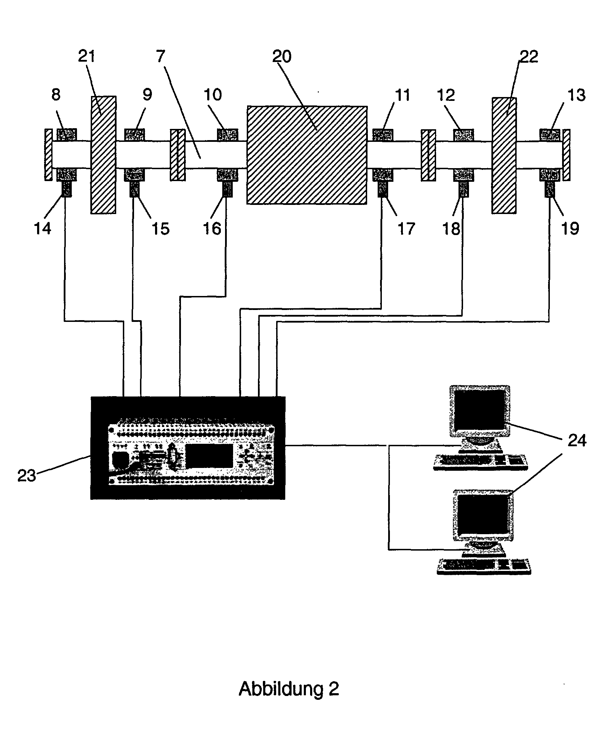

In Abbildung 2 sind bezeichnet mit
- 7: eine Antriebswelle, mit
- 8 bis 13: Lagerstellen der Antriebswelle, mit
- 14 bis 19: Sensoren, die die Temperatur der Lagerstellen erfassen, mit
- 20: ein Antriebsmotor, mit
- 21 und 22: Zähnräder zum Antrieb angeschlossener Aggregate zum Beispiel Luftverdichter, mit
- 23: eine Messeinheit als Interface zwischen den Temperatur Sensoren und mit
- 24: PCs, zur Maschinenüberwachung und Prozessführung.

Die Funktion entsprechend Abbildung 2 ist folgende:
Ein solcher Antrieb kann dazu dienen, über die Zahnräder 21, 22 große Pumpen, Verdichter und ähnliches anzutreiben. Der Elektromotor 20 treibt die Welle 7 an. Die Welle 7 ist durch die Lagerstellen 8, 9, 10, 11, 12, 13 sechsfach gelagert. Die Sensoren 14, 15, 16, 17, 18, 19 dienen dazu die Temperaturen der einzelnen Lagerstellen zu erfassen. Über Leitungen werden die Temperatursignale einem Messinterface 23 zugeführt. Je nach Bauart des Messinterface 23 kann es eine Reihe von Aufgaben übernehmen Wenn der Typ der Temperatursensoren 14, 15, 16, 17, 18, 19 Thermoelemente sind, so liefern diese Millyvoltsignale. Das Messinterface 23 formt diese Signale in digitale Messwerte in °C um. Die Temperaturmesswerte gelangen über ein Datennetz an PCs 24. Auf einem dieser PCs 24 ist die beherrschende Software zum Aufspüren von kleinen Veränderungen, in diesem Falle Änderungen an den Temperaturwerten der Lagerstellen 8 bis 13, installiert. Solche Temperaturwerte sind nicht konstant. Sie ändern sich mit der Drehzahl der Welle, der Radialkraft, die auf die einzelnen Lagerstellen 8 bis 13 wirkt und mit der Umgebungstemperatur. Es scheint unmöglich, kleine Veränderungen aufzuspüren, die für den Zustand der Lager 8 bis 13 relevant sind. Kleine Veränderungen der Temperaturwerte der einzelnen Lager 8 bis 13 sind für die zu erwartende Standzeit bedeutsam. Progressive Temperaturänderungen, auch wenn sie gering sind, deuten auf einen baldigen Ausfall des Lagers hin. Bei sprunghaften Veränderungen steht ein Crash unmittelbar bevor. Um kleine Veränderungen aufzuspüren, wird der innere Zusammenhang über die gemeinsame Wellendrehzahl der Welle 7 genutzt.

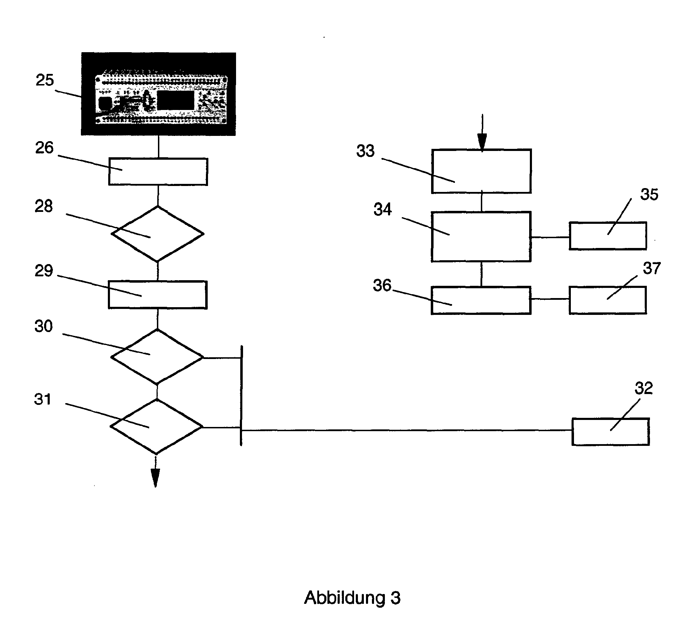

In Abbildung 3 bezeichnen die Bezugszahlen folgende Dinge:
- 25: eine Messeinheit als Interface zwischen dem Prozess und den PCs,
- 26: ein Modul (Messdaten erfassen und gruppieren). Die Mess- daten werden vom Interface gelesen und zu Gruppen zusammengefasst;
- 28: ein weiteres Modul (Gültigkeitsbedingungen prüfen). Es berechnet zuerst die aktuellen Gültigkeitsbedingungen und prüft entsprechend der aktuellen Gültigkeitsbedingungen, ob die Messdaten der Gruppe für eine Weiterverarbeitung gültig sind. Wenn die Daten nicht gültig sind, werden sie verworfen;
- 29: ein drittes Modul (Messdaten mit Bezugswert verrechnen). Es berechnet zuerst den aktuellen Bezugswert und verrechnet dann die Messdaten der Gruppe mit dem aktuellen Bezugswert. Das Ergebnis sind normierte Werte;
- 30: ein viertes Modul (auf Messfehler prüfen). Es prüft die normierten Werte mit Hilfe der Kriterien, die auf Störungen der Messtechnik schließen lassen;
- 31: ein fünftes Modul (auf Betriebsstörung prüfen). Es prüft die normierten Werte mit Hilfe der Kriterien, die auf schwerwiegende Betriebsstörungen schließen lassen;
- 32: eine Warnliste als Ausgabemedium für das Bedienungspersonal. In die Warnliste werden Störungen der Messtechnik und schwerwiegende Betriebsstörungen aufgenommen;
- 33: ein sechstes Modul (normierte Werte verdichten). Es verdichtet die normierten Werte aller Messgruppen zu Minuten-, Stunden-, Tages-, Monatswerten und erstellt mit diesen Werten Datensätze;
- 34: ein siebtes Modul (Datenpool). In dem Modul werden die Datensätze aller Messgruppen der normierten statistischen Werte abgelegt;
- 35: ein achtes Modul (Trendausgabe). Es ermöglicht dem Bedienungspersonal Trends der gespeicherten Datensätze des Datenpools anzusehen;
- 36: ein neuntes Modul (auf Veränderungen untersuchen). Es untersucht die verdichteten normierten statistischen Werte auf Veränderungen und
- 37: ein zehntes Modul (Wartungsliste und Trendausgabe). Es ist ein Ausgabemedium. Die Messkanäle, bei denen Veränderungen diagnostiziert wurden, werden in die Wartungsliste aufgenommen und die Trends abrufbereit gehalten. Somit kann sich der Benutzer über den Maschinenzustand informieren und bestimmt Zeitpunkte für Wartungsarbeiten festlegen.

Die Funktion entsprechend Abbildung 3 ist folgende:
Abbildung 3 zeigt das Ablaufdiagramm bei der Verarbeitung der Daten für eine Messgruppe. Es können gleichzeitig mehrere Messgruppen bearbeitet werden. Das System ist nicht auf Temperaturmessungen beschränkt. Es können zum Beispiel Gruppen für Druckverläufe bei Pumpen und Verdichtem, Durchflüsse von flüssigen oder gasförmigen Medien etc. als Messgruppen vorgesehen werden. Alle verfügbaren Messdaten, die den Einfluss von Verschleiß, Verschmutzung, Korrosion wiederspiegeln, können in das System aufgenommen werden. Somit erhält der Benutzer ein Gesamtbild des Maschinenzustandes und kann besser als bisher den Maschinen/Anlagen Zustand beurteilen und optimale Zeitpunkte für Wartungsarbeiten festlegen.

Die beherrschende Software enthält ein Konfigurationsteil und ein Ablaufteil.

Im Konfigurationsteil werden Messgruppen aus den verfügbaren Messkanälen festgelegt und individuelle Namen für die Messgruppen vergeben. Der Ablauf bei der Bearbeitung der Messdaten kann in vielfältiger Weise durch Konfiguration den vorliegenden Gegebenheiten angepasst werden.

Abbildung 3 zeigt das Ablaufdiagramm konfiguriert für die Bearbeitung der Lagertemperaturen einer Antriebswelle entsprechend Abbildung 2.

Die Messeinheit 25 dient als Interface zwischen dem Prozess, der zu Überwachen ist. In dem Prozess sind Sensoren vorgesehen, die über Verbindungsleitungen mit der Mess- und Steuereinheit 25 verbunden sind. Die Mess- und Steuereinheit 25 ist über ein Datennetzwerk mit dem PC verbunden, auf dem die beherrschende Software installiert ist.

Das Modul 26 (Messdaten erfassen und gruppieren) liest die Messdaten vom Interface 25. Es bildet einzelne Messgruppen, die unabhängig voneinander, parallel bearbeitet werden. Bei den Benutzerschnittstellen den Modulen 32, 35, 37 laufen die Daten der Messgruppen wieder zusammen, um dem Benutzer ein Gesamtbild unabhängig von den einzelnen Messgruppen zu ermöglichen.

Im Modul 28 (Gültigkeitsbedingungen prüfen) werden die Bedingungen geprüft, unter denen die Messdaten der Gruppe für eine Weiterverarbeitung gültig sind. Wenn die Bedingungen nicht erfüllt sind, werden die Daten verworfen. Es ist leicht einzusehen, dass die Messdaten nicht relevant sind, wenn der Antrieb stillsteht. Aber auch im Anlauf, wenn die Temperaturen von Umgebungs- auf Betriebstemperatur ansteigen, sind relevante Daten nicht gewährleistet. Als Kriterien für die Gültigkeit der Messdaten kann eine Mindestdrehzahl in Verbindung mit einer Anlaufzeit vorgesehen werden. Erst, wenn die Anlaufzeit abgelaufen ist und die Drehzahl einen Minimumwert überschritten hat, sind die Temperaturwerte für die Weiterverarbeitung brauchbar, da sie sich nur noch wenig ändern. Somit ist die Bedingung für die Gültigkeit der Messwerte erreicht. Die Bedingungsgröße wird aus der Drehzahl und der Anlaufzeit gebildet. Die Daten werden durch den Modul 28 für die weitere Bearbeitung freigegeben.

Das Modul 29 (Messdaten mit Bezugswert verrechnen), stellt den Bezug der Messdaten der Messgruppe untereinander her. Die jetzt vorliegenden Messdaten sind noch nicht miteinander vergleichbar, da sie unterschiedliche Amplituden aufweisen. Z.B. ist der Einfluss unterschiedlicher Radialkräfte aufgrund unterschiedlicher Drehmomente während der Laufzeit nicht kompensiert. Ebenso ist der Einfluss der Umgebungstemperatur vorhanden. Um solche Einflüsse auszuschalten wird eine Bezugsgröße eingeführt. Mit dem Bezugswert der Bezugsgröße werden im Modul 29 Messdaten der Messkanäle der Messgruppe verrechnet. Als Ergebnis stehen normierte Werte für die weitere Bearbeitung zur Verfügung. Im dem Beispiel der Lagertemperaturen wurde bei der Konfiguration der jeweilige Mittelwert der einzelnen Temperaturwerte der Lagerstellen als Bezug vorgesehen. Die prozentuale Differenz der einzelnen Temperaturen der Lagerstellen zum jeweiligem Mittelwert ist nun das normierte Kriterium für die Weiterverarbeitung. Die so normierten Werte werden im weiteren Verlauf zu normierten statistischen Werten verdichtet und können dann über lange Zeiträume verglichen werden. Sie liefern verlässliche Aussagen über kleinste Veränderungen, die sonst nicht erkannt würden.

Das Modul 30 (auf Messfehler prüfen) prüft die normierten Werte, ob ein Messfehler vorliegt, der auf eine Störung der Messtechnik schließen lässt. Solche Fehler sind zum einen dadurch gekennzeichnet, dass ein normierter Wert erscheint, der betrieblich nicht möglich ist. Zum Beispiel, wenn der normierte Wert einer Temperatur plötzlich auf Null abfällt oder auf einen Maximalwert ansteigt. Fehler dieser Art weisen auf eine Unterbrechung oder Kurzschluss meist bei den Sensorleitungen hin. Ebenfalls kann ein Fehler der Messtechnik diagnostiziert werden, wenn die Streubreite der normierten statistischen Werte ansteigt. Derartige Fehler werden in der Warnliste 32 dem Benutzer, gekennzeichnet als Messfehler, zusammen mit einer Trendgraphik des gestörten Messkanals angezeigt. Je nach Konfiguration können solche Fehler auch zur Alarmierung und zur Abschaltung der Maschine/Anlage führen.

Das Modul 31 (auf Betriebsstörung prüfen) prüft die Kriterien, die auf eine schwerwiegende Betriebsstörung hinweisen. Die normierten Werte haben den Modul 30 passiert, somit kann eine Störung der Messkette ausgeschlossen werden. Nun wird im Modul 31 geprüft, ob ein Sprung in den normierten Werten aufgetreten ist, der einen festgelegten Grenzwert überschreitet. Schwerwiegende Betriebsstörungen werden in der Warnliste 32 dem Benutzer gekennzeichnet als schwerwiegende Betriebsstörung zusammen mit einer Trendgraphik des gestörten Messkanals angezeigt. Schwerwiegende Betriebsstörungen können je nach Konfiguration zur Alarmierung und zur Abschaltung der Maschine/Anlage führen.

Das Modul 33 (Datensätze erstellen), hat die Aufgabe die normierten Werte, bei denen Messfehler in Modul 30 und schwerwiegende Betriebsstörungen in Modul 31 ausgesondert wurden, statistisch zu verdichten. Dies geschieht dadurch, dass die Messdaten der einzelnen Gruppen zu Minuten-, Stunden-, Tages-, Monatswerten verdichtet werden. Die normierten statistischen Werte der einzelnen Messgruppen werden in Datensätzen zusammengefasst. Somit wird es Datensätze für Minuten-, Stunden-, Tages-, Monatswerte der Messgruppe geben.

Die Datensätze aller Messgruppen werden in einem Modul 34 (Datenpool) zusammengefasst. Es wird meist nicht Iohnenswert sein alle Minutenwerte über Jahre zu speichern. Somit ist es Aufgabe des Moduls 34 entsprechend der Konfiguration dafür zu sorgen, dass, je nach Wunsch des Benutzers, die ältesten für die Auswertung nicht mehr benötigten Minuten-, Stunden- eventuell Tageswerte gelöscht werden.

Das Modul 35 (Trendausgabe). Ist ein Ausgabemedium. Es ermöglicht dem Bedienungspersonal Trends der gespeicherten Datensätze des Datenpools anzusehen. Somit können die Daten aller Messkanäle über lange Zeiträume zurückverfolgt und graphisch dargestellt werden. Der Modul 35 (Trendausgabe) liefert Trends der Messkanäle unabhängig davon, ob Veränderungen aufgetreten sind.

In dem Modul 36 (auf Veränderungen untersuchen) werden die normierten statistischen Werte der einzelnen Messkanäle aller Messgruppen automatisch auf Veränderungen hin untersucht. Dabei wird zuerst geprüft, ob eine Veränderung der Werte stattgefunden hat. Wenn dies erkannt worden ist, so wird untersucht, ob diese Veränderung linear über die Zeit ist, oder ob ein progressives Verhalten erkennbar ist.

In beiden Fällen werden die Messkanäle in das Modul 37 (Wartungsliste, Trendausgabe) aufgenommen. Das Modul 37 ist ein Ausgabemedium, in das die Messkanäle, bei denen Veränderungen diagnostiziert wurden, aufgenommen werden und die Trends abrufbereit verfügbar sind. Somit kann sich der Benutzer über den Maschinenzustand informieren und Zeitpunkte für Wartungsarbeiten bestimmen.

## Patentansprüche

1. System zum Aufspüren von Veränderungen an technischen Prozessen, Maschinen oder dergleichen, bei denen Messdaten über Messketten erfasst werden, die Sensoren, Sensorleitungen und eine Auswerteelektronik enthalten, und mit einer beherrschenden Software,
**dadurch gekennzeichnet, dass** voneinander abhängige Messgrößen zu Messgruppen zusammengefasst (Modul 26) werden, dass Gültigkeitsbedingungen für die Messdaten definiert (Modul 28) werden, dass die Messdaten nur dann genutzt werden, wenn die Gültigkeitsbedingungen erfüllt sind, und dass die Messdaten der Messgruppen mit Bezugsgrößen verknüpft (Modul 29) werden.

2. System zum Aufspüren von Veränderungen nach Anspruch 1,
**dadurch gekennzeichnet, dass** zumindest eine der Gültigkeitsbedingungen für die Messdaten (Modul 28) das Über- oder Unterschreiten eines speziellen Messwertes einer Messgröße ist oder das Über- oder Unterschreiten eines Wertes, der aus mehreren speziellen Messwerten mehrerer Messgrößen berechnet ist.

3. System zum Aufspüren von Veränderungen nach einem der Ansprüche 1 oder 2,
**dadurch gekennzeichnet, dass** zumindest eine der Gültigkeitsbedingungen für die Messdaten (Modul 28) eine statistische Größe ist, gebildet aus einer abhängigen Messgröße oder einer Verknüpfung mehrerer abhängiger Messgrößen mit einer Zeitperiode als Basis.

4. System zum Aufspüren von Veränderungen nach einem der vorhergehenden Ansprüche,
**dadurch gekennzeichnet, dass** zumindest eine der Gültigkeitsbedingungen für die Messdaten (Modul 28) eine Wartezeit ist, die mit dem Über- oder Unterschreiten eines Messwertes einer Messgröße oder mit dem Über- oder Unterschreiten eines Wertes, der aus mehreren speziellen Messwerten mehrerer Messgrößen berechnet ist, beginnt.

5. System zum Aufspüren von Veränderungen nach einem der vorhergehenden Ansprüche,
**dadurch gekennzeichnet, dass** zumindest eine der Gültigkeitsbedingungen für die Messdaten (Modul 28) dadurch definiert ist, dass die abhängigen Messgrößen über eine Zeitperiode konstant sind.

6. System zum Aufspüren von Veränderungen nach einem der vorhergehenden Ansprüche,
**dadurch gekennzeichnet, dass** zumindest eine der Gültigkeitsbedingungen für die Messdaten (Modul 28) Einstellgrößen im Prozess sind.

7. System zum Aufspüren von Veränderungen nach einem der vorhergehenden Ansprüche,
**dadurch gekennzeichnet, dass** zumindest eine der Gültigkeitsbedingungen für die Messdaten (Modul 28) die Belastung, Teillast oder Volllast, oder eine von der Belastung abhängige Größe sind.

8. System zum Aufspüren von Veränderungen nach Anspruch 1,
**dadurch gekennzeichnet, dass** zumindest eine der Bezugsgrößen aus einer der abhängigen Messgrößen oder aus einer berechneten Größe mehrerer Messgrößen der Messgruppe gebildet ist.

9. System zum Aufspüren von Veränderungen nach einem der Ansprüche 1 oder 8,
**dadurch gekennzeichnet, dass** zumindest eine der Bezugsgrößen aus dem Mittelwert der abhängigen Messgrößen der Messgruppe oder aus dem Mittelwert eines Teiles der abhängigen Messgrößen der Messgruppe gebildet ist.

10. System zum Aufspüren von Veränderungen nach einem der Ansprüche 1, 8 oder 9,
**dadurch gekennzeichnet, dass** zumindest eine der Bezugsgrößen gleich der Messgröße ist, wenn eine Messgruppe nur eine Messgröße enthält.

11. System zum Aufspüren von Veränderungen nach einem der vorhergehenden Ansprüche,
**dadurch gekennzeichnet, dass** als Kennung für Messgruppen und für Datensätze der Messgruppen ein individueller Name vorgesehen ist.

12. System zum Aufspüren von Veränderungen nach einem der vorhergehenden Ansprüche,
**dadurch gekennzeichnet, dass** normierte Werte der gleichen Messgruppe zu normierten statistischen Werten verdichtet werden.

13. System zum Aufspüren von Veränderungen nach Anspruch 12,
**dadurch gekennzeichnet, dass** Zeitwerte als Basis für die normierten Werte vorgesehen sind.

14. System zum Aufspüren von Veränderungen nach Anspruch 13,
**dadurch gekennzeichnet, dass** die Zeitwerte eine Auswahl der gebräuchlichen Zeitgrößen, wie Sekunden, Minuten, Stunden, Tage, Wochen, Monate, Jahre sind.

15. System zum Aufspüren von Veränderungen nach einem der vorhergehenden Ansprüche,
**dadurch gekennzeichnet, dass** diejenigen normierten statistischen Werte in eine Wartungsliste (Modul 37) mit niedriger Priorität aufgenommen werden, bei denen die Trendkurve der normierten statistischen Werte den Charakter einer Geraden angenommen hat, deren Winkel, unter Berücksichtigung einer Toleranz, von der Waagrechten abweicht.

16. System zum Aufspüren von Veränderungen nach einem der vorhergehenden Ansprüche,
**dadurch gekennzeichnet, dass** diejenigen normierten statistischen Werte in eine Wartungsliste (Modul 37) mit hoher Priorität aufgenommen werden, bei denen die Trendkurve einen degressiven, progressiven oder einen sprunghaften Verlauf zeigt.

17. System zum Aufspüren von Veränderungen nach einem der vorhergehenden Ansprüche,
**dadurch gekennzeichnet, dass** die normierten Werte der zuletzt erfassten Messwerte auf Störungen in der Messkette bei der Erfassung der Messdaten und auf plötzlich auftretende schwerwiegende Störungen untersucht werden.

18. System zum Aufspüren von Veränderungen nach einem der vorhergehenden Ansprüche,
**dadurch gekennzeichnet, dass** eine Störung in der Messkette bei der Erfassung der Messdaten angenommen wird, wenn sich bei dem Vergleich des normierten Wertes des zuletzt erfassten Messwertes mit dem normierten Wert des vorher erfassten Messwertes ein Wert zeigt, der betrieblich nicht vorkommen kann.

19. System zum Aufspüren von Veränderungen nach Anspruch 18,
**dadurch gekennzeichnet, dass** der gestörte Messkanal in eine Warnliste (32) aufgenommen wird.

20. System zum Aufspüren von Veränderungen nach Anspruch 17,
**dadurch gekennzeichnet, dass** eine schwerwiegende Betriebsstörung angenommen wird, wenn sich bei dem Vergleich des normierten Wertes des zuletzt erfassten Messwertes zu den normierten Werten der vorher erfassten Messwerte, der keine Störung in der Messtechnik darstellt, ein Differenzwert zeigt, dessen Betrag einen Grenzwert übersteigt.

21. System zum Aufspüren von Veränderungen nach Anspruch 20,
**dadurch gekennzeichnet, dass** der gestörte Messkanal in die Warnliste (32) mit hoher Priorität aufgenommen wird, das Bedienungspersonal alarmiert und/oder die Anlage abgeschaltet wird.

22. System zum Aufspüren von Veränderungen nach einem der vorhergehenden Ansprüche,
**dadurch gekennzeichnet, dass** eine Störung in der Messkette bei der Erfassung der Messdaten angenommen wird, wenn die Streubreite der normierten statistischen Werte unter Berücksichtigung einer Toleranz einen größeren Wert annimmt als die zuvor erfassten normierten statistischen Werte.

23. System zum Aufspüren von Veränderungen nach Anspruch 22,
**dadurch gekennzeichnet, dass** der gestörte Messkanal in die Warnliste (32) mit hoher Priorität aufgenommen wird, das Bedienungspersonal alarmiert und/oder die Anlage abgeschaltet wird.

24. System zum Aufspüren von Veränderungen nach einem der vorhergehenden Ansprüche,
**dadurch gekennzeichnet, dass** bei Störungen in der Messtechnik plausible Ersatzwerte bereitgestellt werden, die den weiteren Betrieb der Anlage unter eingeschränkten Bedingungen ermöglichen.
